# EUROPÄISCHE PATENTSCHRIFT

(11) **EP 0 819 712 B1**
(45) Veröffentlichungstag und Bekanntmachung des Hinweises auf die Patenterteilung: **25.02.2004**
(21) Anmeldenummer: 97111491.3
(22) Anmeldetag: 08.07.1997
(51) Int. Cl.: C08G 18/48, C08G 65/30

(54) **Verfahren zur Herstellung von Polyurethanweichschaumstoffen**
Process for the preparation of flexible polyurethane foams
Procédé de préparation de mousses flexibles de polyuréthane

(30) Priorität: 19.07.1996 DE 19629160
(43) Veröffentlichungstag der Anmeldung: 21.01.1998
(73) Patentinhaber: BASF AKTIENGESELLSCHAFT, 67056 Ludwigshafen (DE)
(72) Erfinder: Guettes, Bernd, 03238 Sallgast (DE); Dinsch, Stefan, 01993 Schipkau (DE); Steinchen, Karl-Heinz, 01987 Schwarzheide (DE); Hoeppner, Gerd, 01987 Schwarzheide (DE); Wagner, Klaus, 67258 Hessheim (DE); Larbig, Harald, 67063 Ludwigshafen (DE); Lutter, Heinz-Dieter, 69151 Neckargemünd (DE)

(56) Entgegenhaltungen:
- EP-A- 0 420 274
- EP-A- 0 671 425
- US-A- 4 143 072
- US-A- 4 316 991
- US-A- 4 528 112
- US-A- 5 238 971

## Beschreibung

Die Erfindung betrifft ein Verfahren zur Herstellung von Polyurethan (PUR)-Weichschaumstoffen durch Einsatz von Polyetherpolyolen, herstellbar durch basisch-katalysierte Umsetzung von niederen Alkylenoxiden mit OH-funktionellen Startsubstanzen, die während oder nach der Alkylenoxidanlagerung bei einem Wassergehalt von höchstens 0,1 Gew.-% einer kombinierten thermisch-destillativen Behandlung unterzogen werden.

Die Herstellung von flexiblen PUR-Schäumen durch Umsetzung von aromatischen Di- und/oder Polyisocyanaten mit hochmolekularen 2- und/oder 3-funktionellen Polyetherpolyolen, hergestellt durch Umsetzung von 2- und/oder 3-funktionellen alkalischen Startsubstanzen, wie Glykolen, Glycerin und/oder Trimethylolpropan (TMP), mit niederen Alkylenoxiden im Beisein üblicher Polyurethankatalysatoren, Treibmittel und weiteren Zusatzstoffen, ist seit langem bekannt. Die Polyetherolsynthese nach der anionischen Polymerisation wird unter basischer Katalyse, insbesondere unter Einsatz von Alkali -und Erdalkalihydroxiden, und bei Temperaturen von 80° bis 130°C und erhöhten Drücken durchgeführt. Nach der Synthese wird zur Entfernung des Katalysators mittels Säure, insbesondere Salz- und/oder Phosphorsäure, neutralisiert, zur Entfernung von Wasser und anderen leichtflüchtigen Bestandteilen destilliert, insbesondere unter Vakuum und bei Temperaturen von 80°-130°C, und abschließend werden die Salze entfernt. Zur PUR-Herstellung werden Polyol und Isocyanat direkt oder über das sogenannte Prepolymerverfahren umgesetzt.

Näheres hierzu kann dem Kunststoffhandbuch, Band VII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel, entnommen werden. Durch geeignete Wahl der Aufbaukomponenten und ihrer Mengenverhältnisse können Polyurethanweichschaumstoffe mit sehr guten mechanischen Eigenschaften hergestellt werden.

Problematisch für bestimmte Anwendungen des PUR-Weichschaumes, insbesondere im Möbelbereich und in der Textilbeschichtung, ist der Geruch der PUR-Schäume. Die von den PUR-Katalysatoren und den PUR-Hilfs- und Zusatzstoffen ausgehenden Ursachen für die Geruchsproblematik werden durch Umstellung auf höhersiedende, schwerer flüchtige Substanzen mit niederen Dampfdrücken und Einsatz von einbaubaren Katalysatoren, z.B. des Spaceramintyps gemäß

EP-A-05 39 819, beseitigt. Die von den Polyolen herrührenden und Geruch verursachenden Substanzen können analog der Entfernung von cyclischen Ethern bzw. ungesättigten Polyolbestandteilen, wie im US-A-4251654 bzw. EP-A-576 132 beschrieben, durch Extraktion mit Wasser oder Glykolen entfernt werden. Damit wird aber nur eine sehr begrenzte Anzahl von leichtflüchtigen Substanzen entfernt, andere lagern sich bei diesen Bedingungen zu geruchsintensiven Substanzen erst um (Acetalbildung bzw.-spaltung). Die bei der üblichen Reinigungsoperation zur Katalysatorentfernung durchgeführte Destillation zur Wasserentfernung beseitigt, wie z.B. in DD-A-216248 beschrieben, zusätzlich auch leichtflüchtige Bestandteile. Bei der Neutralisation und nachgeschalteten Wasserentfernung kommt es zu laufenden pH-Wert-Veränderungen und damit zu einer Vielzahl von Umlagerungen der Geruchsbildner (Aldehyde, Dioxane) oder, wie in WO-A-9318083 beschrieben und beabsichtigt, sogar zu Verschiebungen der Molgewichtszusammensetzung.

Der Erfindung lag daher die Aufgabe zugrunde, ein Verfahren zur Herstellung von PUR-Weichschaumstoffen durch Umsetzung von organischen Diisocyanaten und/oder Polyisocyanaten mit Polyolen, insbesondere Polyetherpolyolen, im Beisein von Treibmitteln, Katalysatoren, Vernetzungsmitteln und weiteren üblichen Hilfs- und Zusatzstoffen bei Einsatz modifizierter, vollständig oder weitgehend geruchsfreier Polyetherpolyole zu entwickeln, das unter Vermeidung von chemischen und extraktiven Zusatzoperationen sowie von Umlagerungsreaktionen und Molekulargewichtsverschiebungen zu vollständig oder weitgehend geruchsfreien PUR-Materialien führt.

Diese Aufgabe wurde erfindungsgemäß dadurch gelöst, daß zur Herstellung der vollständig oder weitgehend geruchsfreien PUR-Weichschaumstoffe als Verbindungen mit mindestens zwei reaktiven Wasserstoffatomen zu mindestens 10 Gew.-% Polyetherpolyole, herstellbar durch basisch-katalysierte Umsetzung von Ethylenoxid, Propylenoxid und/oder Butylenoxid mit OH-funktionellen Startsubstanzen, die während oder nach der Alkylenoxidanlagerung bei einem Wassergehalt von höchstens 0,1 Gew.-% einer kombinierten thermisch-destillativen Behandlung unterzogen werden, zum Einsatz kommen.

Gegenstand der Erfindung ist somit ein Verfahren zur Herstellung von PUR-Weichschaumstoffen durch Umsetzung von
a) organischen und/oder modifizierten organischen Polyisocyanaten mit
b) Verbindungen mit mindestens zwei reaktiven Wasserstoffatomen und
c) gegebenenfalls niedermolekularen Kettenverlängerungs- und/oder Vernetzungsmitteln
in Gegenwart von
d) Treibmitteln,
e) Katalysatoren,
f) Flammschutzmitteln sowie gegebenenfalls
g) weiteren Hilfsmitteln und/oder Zusatzstoffen,
das dadurch gekennzeichnet ist, daß die Verbindungen mit mindestens zwei reaktiven Wasserstoffatomen (b) zu mindestens 10 Gew.-% aus Polyetherpolyolen, herstellbar durch basisch-katalysierte Umsetzung von Ethylenoxid, Propylenoxid und/oder Butylenoxid mit OH-funktionellen Startsubstanzen, bestehen, die während oder nach der Alkylenoxidanlagerung bei einem Wassergehalt von höchstens 0,1 Gew.-% einer kombinierten thermisch-destillativen Behandlung unterzogen werden.

Gegenstand der Erfindung ist weiterhin die Verwendung der erfindungsgemäß hergestellten PUR-Weichschaumstoffe im Automobilund Möbelbereich sowie zur Herstellung von Weichschaum-Textilverbunden.

Als OH-funktionelle Startsubstanzen kommen insbesondere zweiund/oder dreifunktionelle Verbindungen, wie Glykole, beispielsweise Ethylenglykol und Propylenglykol, Glycerin und TMP oder auch Aminoalkohole bzw. Amine und/oder Anteile an höheren Alkoholen, wie Zuckeralkoholen oder Sacchariden, in Frage. Besonders vorteilhaft ist der Einsatz von Glyzerin und/oder TMP einzeln oder im Kombination mit Anteilen an Glykolen.

Erfindungsgemäß werden die niederen Alkylenoxide Ethylenoxid (EO), Propylenoxid (PO) und/oder Butylenoxid (BO), vorzugsweise EO und 1,2-PO, eingesetzt.

Die Polyetherpolyole werden durch basisch-katalysierte Anlagerung der genannten Alkylenoxide an die Startsubstanzen hergestellt.
Als Katalysatoren werden dabei basische Verbindungen, insbesondere Alkali- bzw. Erdalkalihydroxide und/oder Amine, verwendet.
Die Alkylenoxide werden einzeln blockweise und/oder als statistisches Gemisch angelagert.

Die Umsetzung erfolgt unter üblichen Reaktionsbedingungen, insbesondere bei Temperaturen von 80°C bis 130°C und druckloser Fahrweise oder einem Druck bis 1,0 MPa.

Die kombinierte thermisch-destillative Behandlung der Polyetherpolyole wird bei einem Wassergehalt von höchstens 0,1 Gew.-%, vorzugsweise im wasserfreien Zustand, durchgeführt. Sie erfolgt

Die kombinierte thermisch-destillative Behandlung der Polyetherpolyole wird bei einem Wassergehalt von höchstens 0,1 Gew.-%, vorzugsweise im wasserfreien Zustand, durchgeführt. Sie erfolgt üblicherweise bei Temperaturen oberhalb 49°C, vorzugsweise von 80 bis 130°C, unter Normaldruck oder unter Einsatz eines Vakuums von 1 bis 20 mbar, vorzugsweise von 1 bis 10 mbar, und/oder unter Zuführung von Inertgasen. Als Inertgas kommt dabei insbesondere Stickstoff zum Einsatz. Die kombinierte thermisch-destillative Behandlung wird vorzugsweise über eine Oberflächen vergrößernde Einrichtung, ggf. im Gegenstrom eines Inertgases, durchgeführt. Technische Ausführungsformen sind z.B. Füllkörperkolonnen, Glokkenbodenkolonnen, Dünnschicht- bzw. Fallfilmverdampfer.

Durch die kombinierte thermisch-destillative Behandlung werden mögliche Aldehydumlagerungen, Acetal-, Acrolein- und Dioxanbildungen verhindert und gebildete Nebenprodukte entfernt.

Sie kann dabei in den verschiedensten Stadien des Verfahrens erfolgen, beispielsweise bei pH-Werten größer als 7 während der Alkoxylierung, insbesondere beim Alkylenoxidwechsel, und/oder am Abschluß der Alkylenoxidanlagerung bzw. vor dem Wasserzusatz. Nach einem bevorzugten Verfahren wird die thermisch-destillative Behandlung beim Wechsel vom höheren zum niederen Alkylenoxid bei einem Gehalt an freiem höherem Alkylenoxid von höchstens 1 Gew.-%, bezogen auf das Gewicht des Reaktionsgemisches, durchgeführt.

Erfindungsgemäß ist es ebenfalls möglich, die kombinierte thermisch-destillative Behandlung nach der Alkylenoxidanlagerung und Wasserentfernung bzw. nach der Salzabtrennung, ggf. in Verbindung mit einer Übersäuerung des Polyetherpolyols, d. h. bei pH-Werten kleiner als 7, durchzuführen. Des weiteren kann unter gleichen Bedingungen die Behandlung auch während und/oder nach der Prepolymerherstellung erfolgen.

Darüber hinaus kann die kombinierte thermisch-destillative Behandlung zum Zeitpunkt des Anstieges der Bildungsgeschwindigkeit geruchsintensiver Nebenprodukte (Aldehyde, Acetale) durchgeführt werden. Die Bildungsgeschwindigkeit der Nebenprodukte steigt mit dem Anteil an freiem PO und mit der Reaktionstemperatur an und erreicht am Ende der PO-Anlagerung (des langen PO-Blockes) die höchste Steigerungsrate. Der Zeitpunkt ist durch Messung des Gehaltes an freiem PO durch NIR-Spektroskopie möglich. Die Behandlung sollte dann vorzugsweise am Ende der Anlagerung des großen PO-Blockes und/oder einer PO/EO-Statistik erfolgen.

Die thermisch-destillative Behandlung kann durch eine extraktive bzw. sorptive Behandlung mit festen Sorptionsmitteln bzw. mit Extraktionsmitteln ergänzt werden. Als Sorptionsmittel werden insbesondere Alumosilikate und/oder Bentonite und/oder Aktivkohle eingesetzt, zur Extraktion übliche flüssige Extraktionsmittel verwendet. Die Behandlung des Polyetherpolyols mit diesen Mitteln erfolgt vorzugsweise bei Temperaturen von 40 bis 140°C.

Nach der thermisch-destillativen Behandlung werden die Polyetherpolyole in üblicher Weise weiterbehandelt. Der basische Katalysator wird mittels Säuren neutralisiert, das entstehende Wasser wird abdestilliert und Salze werden abfiltriert.

Die so hergestellten und behandelten Polyetherpolyole werden, gegebenenfalls im Gemisch mit weiteren höhermolekularen Verbindungen mit mindestens zwei reaktiven Wasserstoffatomen, wie weiter unten beschrieben, mit den übrigen Komponenten zu den erfindungsgemäßen PUR-Weichschäumen umgesetzt.

Das erfindungsgemäße Verfahren hat den Vorteil, daß durch die spezielle Behandlung eine Vielzahl von ablaufenden Bildungs-, Umlagerungs- und Spaltungsreaktionen unterbrochen und/oder sich schon gebildete niedermolekulare Produkte aus dem Produktbereich Aldehyde, Dioxane, Acetale, Acroleine vor der Spaltung fixiert oder entfernt werden und dadurch der Geruch der Polyetherpolyole, der Prepolymere und der PUR-Weichschäume deutlich verbessert wird.

Die Schaumstoffe weisen dabei ein gleichbleibend hohes mechanisches Eigenschaftsniveau, wie eine hohe Rückprallelastizität sowie niedrige Druckverformungsreste, auf. Überraschenderweise ist es möglich, durch die thermisch-destillative Behandlung ohne eine Verschiebung der Molekulargewichtsverteilung, ohne einen strukturellen Abbau der Polyolmoleküle gezielt nur die geruchsintensiven Nebenprodukte in ihrer Bildung zurückzudrängen bzw. zu entfernen.

Zu den für das erfindungsgemäße Verfahren verwendbaren weiteren Ausgangskomponenten ist im einzelnen folgendes auszuführen:
a) Zur Herstellung der PUR-Weichschaumstoffe eignen sich die bekannten organischen, z.B. aliphatischen, cycloaliphatischen, araliphatischen, heterocyclischen und vorzugsweise aromatischen Di-und/oder Polyisocyanate.
   Im einzelnen seien als aromatische Polyisocyanate beispielhaft genannt: Mischungen aus 4,4'-und 2,4'-Diphenylmethandiisocyanaten (MDI), Mischungen aus MDI-Isomeren und Polyphenylpolymethylenpolyisocyanaten, sogenanntes Roh-MDI, zweckmäßigerweise mit einem Gehalt an MDI-Isomeren von mindestens 50 Gew.-%, vorzugsweise von 60 bis 90 Gew.-% und mehr, bezogen auf das Gesamtgewicht der Mischung, 2,4-und 2,6-Toluylendiisocyanat (TDI) sowie die entsprechenden handelsüblichen Isomerenmischungen, Mischungen aus 2,4-und 2,6-TDI und MDI, vorzugsweise 4,4'- und 2,4'-MDI, und/oder Roh-MDI, beispielsweise solchen mit einem MDI-Gehalt von 30 bis 90 Gew.-%, vorzugsweise 40 bis 80Gew.-%, bezogen auf das Gesamtgewicht des Roh-MDI's.
   Geeignet sind auch sogenannte modifizierte mehrwertige Isocyanate, d.h. Produkte, die durch chemische Umsetzung organischer Di-und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.-%, vorzugsweise von 12 bis 3,5 Gew.-% oder Quasiprepolymere mit einem NCO-Gehalt von 35 bis 14 Gew.-%, vorzugsweise von 34 bis 22 Gew.-%, wobei mit Urethangruppen modifizierte Polyisocyanate aus TDI, insbesondere einem NCO-Gehalt von 34 bis 28 Gew.-% und solche aus 4,4'-MDI, 4,4'- und 2,4'-MDI-Isomerenmischungen oder Roh-MDI, insbesondere einen NCO-Gehalt von 28 bis 14 Gew.-%, insbesondere bevorzugt von 28 bis 22 Gew.-%, bezogen auf das Gesamtgewicht, aufweisen und hergestellt werden durch Umsetzung von Diolen, Oxalkylenglykolen und/oder Polyoxyalkylenglykolen mit Molekulargewichten von 62 bis 6000, vorzugsweise von 134 bis 4200 mit TDI, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylenglykole, die einzeln oder als Gemische eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Uretonimingruppen enthaltende Polyisocyanate, z.B. auf MDI-Isomeren- und/oder TDI-Basis.
   Besonders bewährt haben sich jedoch und daher vorzugsweise Anwendung finden TDI-2,4, TDI-2,6, Mischungen aus TDI-2,4 und - 2,6 und insbesondere Mischungen aus 4,4'- und 2,4'-MDI, Roh-MDI mit einem MDI-Gehalt von mindestens 50 Gew.-%, bezogen auf das Gesamtgewicht, Mischungen aus 4,4'- und 2,4'-MDI und 2,6-TDI-Gemischen, Mischungen aus Roh-MDI und 2,4- und 2,6-TDI-Gemischen und Urethangruppen enthaltenden Polyisocyanatmischungen mit einem NCO-Gehalt von 28 bis 14 Gew.-%, bezogen auf das Gesamtgewicht, hergestellt aus MDI und/oder Roh-MDI und Polyoxypropylen-glykolen mit einem Molekulargewicht von 134 bis 4200 oder Polyoxypropylen-polyoxyethylenpolyolen mit einem Ethylenoxidgehalt von maximal 35 Gew.-% und einem Molekulargewicht von 134 bis 4200, vorzugsweise von 1800 bis 4200.
b) Als Verbindungen mit mindestens zwei reaktiven Wasserstoffatomen (b) werden im wesentlichen die oben beschriebenen Polyetherpolyole eingesetzt. Die so hergestellten und behandelten Polyetherpolyole weisen mittlere Molekulargewichte von 800 bis 8000, insbesondere von 1000 bis 7000 auf, haben entsprechend der Anwendung primäre und/oder sekundäre OH-Gruppen am Ende und weisen einen vernachlässigbaren Anteil an geruchsintensiven und sonstigen Nebenprodukten auf.
   Die erfindungsgemäßen Polyetherpolyole können allein oder im Gemisch mit weiteren höhermolekularen Verbindungen mit mindestens zwei reaktiven Wasserstoffatomen verwendet werden. Hierfür kommen die bei der Herstellung von PUR-Weichschaumstoffen üblichen H-funktionellen Verbindungen, wie weitere Polyetherpolyole sowie Polyesterpolyole, aber auch Polythioetherpolyole, Polyesteramide, hydroxylgruppenhaltige Polyacetale und hydroxylgruppenhaltige aliphatische Polycarbonate oder Mischungen aus mindestens zwei der genannten Verbindungen in Betracht. Vorzugsweise werden zusätzlich Polyether- bzw. Polyesterpolyole mit mittleren Molekulargewichten von 1000 bis 8000 eingesetzt. Der Anteil der erfindungsgemäß eingesetzten Polyetherpolyole beträgt dabei mindestens 10 Gew.-%, vorzugsweise 20 bis 100 Gew.-%, bezogen auf die Komponente b).
   Werden als weitere Verbindungen mit mindestens zwei reaktiven Wasserstoffatomen Polyetherpolyole eingesetzt, so sind diese zweckmäßigerweise vorher durch geeignete Verfahren, beispielsweise durch destillative oder extraktive Behandlungen, von geruchsintensiven Stoffen zu befreien.
   Als weitere Polyetherpolyole finden zweckmäßigerweise solche mit einer Funktionalität von durchschnittlich 2,0 bis 4,0, vorzugsweise 2,0 bis 3,0 und insbesondere 2,0 bis 2,8 und einem Molekulargewicht von durchschnittlich 2200 bis 8000, vorzugsweise 3600 bis 6500, Verwendung. Geeignet sind auch Mischungen aus Polyetherpolyolen, und Polyether-Polyaminen mit einem Polyether-Polyamingehalt von maximal 35 Gew.-%, vorzugsweise 0,5 bis 12 Gew.-%, bezogen auf das Gesamtgewicht. Geeignet sind ferner Polyether-polyole mit Molekulargewichten unter 2200, beispielsweise von 250 bis 2200. Diese werden jedoch zweckmäßigerweise nur in solchen Mengen und im Gemisch mit höhermolekularen Polyetherpolyolen eingesetzt, daß Mischungen mit Molekulargewichten von durchschnittlich mindestens 2200 resultieren.
   Geeignete Polyetherpolyole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 4, vorzugsweise 2 bis 3 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls monound dialkylsubstituiertes Ethylendiamin, Diethylentriamin, Triethylentetramin, 1,3-Propylendiamin, 1,3- bzw. 1,4-Butylendiamin, 1,2- 1,3-, 1,4- 1,5- und 1,6-Hexamethylendiamin.
   Als Startermolküle kommen ferner in Betracht: Alkanolamine, Dialkanolamine und/oder Trialkanolamine, wie Ethanolamin, Diethanolamin, N-Methyl- und N-Ethylethanolamin, N-Methylund N-Ethyldiethanolamin und Triethanolamin und Ammoniak. Vorzugsweise verwendet werden mehrwertige, insbesondere zweiund/oder dreiwertige Alkohole und/oder Alkylenglykole, wie z.B. Ethandiol, Propandiol-1,2 und -1,3, Diethylenglykol, Dipropylenglykol, Butandiol-1,4, Hexandiol-1,6, Glycerin und Trimethylolpropan sowie Pentaerythrit.
   Die Polyetherpolyole, vorzugsweise Polyoxypropylen- und Polyoxypropylen-polyoxyethylen-polyole, besitzen, wie bereits dargelegt wurde, eine Funktionalität von 2 bis 4, vorzugsweise 2 bis 3,0 und insbesondere 2 bis 2,8 und Molekulargewichte von 2200 bis 8000, vorzugsweise 3600 bis 6500 und insbesondere 3900 bis 6000 und geeignete Polyoxytetramethylenglykole ein Molekulargewicht bis ungefähr 3500, vorzugsweise von 250 bis 2200. Insbesondere eingesetzt werden Polyoxypropylen-polyoxyethylen-polyole mit mehr als 50%, vorzugsweise mehr als 70% endständigen primären Hydroxylgruppen.
   Als Polyetherpolyole eignen sich ferner polymermodifizierte Polyetherpolyole, vorzugsweise Pfropf-polyether-polyole. Diese können hergestellt werden durch in situ Polymerisation von olefinisch ungesättigten Monomeren oder -gemischen, wie z.B. Styrol, Acrylnitril oder vorzugsweise Styrol-Acrylnitrilmischungen, in Polyetherpolyolen, z.B. den oben beschriebenen Polyether-polyolen, analog den Angaben der deutschen Patentschriften Nr. 1111394, 1222669 (US3304273, 3383351, 3523093), 1152536 (GB1040452) und 1152537 (GB987618) oder durch Dispergieren von Pfropfpolymeren, die zuvor durch radikalische Polymerisation in Lösungsmittel hergestellt wurden, in Polyetherpolyolen analog den Angaben der US-Patentschriften 3391092, 4014846, 4093573. Zur Herstellung der Pfropfpolyetherpolyole eignen sich sowohl die obengenannten gesättigten Polyetherpolyole, die gemäß US Reissue Patent Nr. 28715 im wesentlichen frei sind von ethylenisch ungesättigten Einheiten als auch olefinisch ungesättigte Polyether-polyole wie sie z.B. in der US-Patentschrift 3652659 und im US Reissue Patent 29014 beschrieben werden. Als polymermodifizierte Polyoxyalkylenpolyole eignen sich ferner tert. Aminogruppen gebunden enthaltende Polyurethan-Polyetherpolyoldispersionen, wie sie beispielsweise beschrieben werden in der DE-A-3231497. Die polymermodifizierten Polyoxyetherpolyole, die zweckmäßigerweise 2 bis 35 Gew.-%, vorzugsweise 3 bis 25 Gew.-%, bezogen auf das Gesamtgewicht, Polymerpartikel besitzen, können ebenso wie die Polyoxyalkylenpolyole einzeln oder in Form von Mischungen verwendet werden.
   Als Polyesterpolyole finden zweckmäßigerweise solche mit einer Funktionalität von durchschnittlich 2,0 bis 3,5, vorzugsweise 2,0 bis 2,8, und einem Molekulargewicht von durchschnittlich 800 bis 4000, vorzugsweise 1500 bis 2800, Verwendung.
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutarund Adipinsäure in Mengenverhältnissen von beispielsweise 20 bis 35 : 35 bis 50 : 20 bis 32 Gew.-Teilen und insbesondere Adipinsäure. Beispiele für zwei-und mehrwertige Alkohole, insbesondere Diole, sind: Ethandiol, Diethylenglykol, 1,2-bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. e-Caprolacton, oder Hydroxycarbonsäuren, z.B. ω-Hydroxycapronsäure.
   Zu den einsetzbaren Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
c) Zur Herstellung der erfindungsgemäßen PUR-Weichschaumstoffe werden zweckmäßigerweise zusätzlich niedermolekulare Kettenverlängerungs-und/oder Vernetzungsmittel (c) mitverwendet. Als derartige Mittel kommen polyfunktionelle, insbesondere di- und trifunktionelle Verbindungen mit mittleren Molekulargewichten von 18 bis ungefähr 400, vorzugsweise von 62 bis ungefähr 300, in Betracht. Verwendet werden beispielsweise Di- und/oder Trialkanolamine, wie z.B. Diethanolamin und Triethanolamin, aliphatische Diole und/oder Triole mit 2 bis 6 Kohlenstoffatomen im Alkylenrest, wie z.B. Ethan-, 1,4-Butan-, 1,5-Pentan-, 1,6-Hexandiol, Glycerin und/oder Trimethylolpropan, Wasser und niedermolekulare Ethoxylierungs- und/oder Propoxylierungsprodukte, hergestellt aus den vorgenannten Dialkanolaminen, Trialkanolaminen, Diolen und/oder Triolen sowie aliphatischen und/oder aromatischen Diaminen, wie z.B. 1,2-Ethan-, 1,4-Butan, 1,6-Hexandiamin, 2,4- und/oder 2,6-Toluylen-diamin, 4,4'-Diamino-diphenylmethan, 3,3'-di- und/oder 3,3',5,'-tetraalkyl-substituierten 4,4'-Diamino-diphenylmethanen, als Startermolekülen und Alkylenoxid oder -gemischen.
   Vorzugsweise eingesetzt werden Dialkanolamine, Diole und/oder Triole und insbesondere Ethandiol, Butandiol-1,4, Hexandiol-1,6, Diethanolamin, Trimethylolpropan und Glycerin oder Mischungen aus mindestens zwei der vorgenannten Verbindungen.
   Die Kettenverlängerungs-und/oder Vernetzungsmittel kommen zweckmäßigerweise in solchen Gewichtsmengen zur Anwendung, daß pro 100 Gew.-Teile der höhermolekularen Verbindungen mit mindestens zwei reaktiven Wasserstoffatomen (b) 0 bis 25 Gew.-Teile, vorzugsweise 4 bis 10 Gew.-Teile, der Komponente (c) in der Reaktionsmischung vorliegen.
d) Zu Treibmitteln, welche zur Herstellung der erfindungsgemäßen PUR-Weichschaumstoffe verwendet werden, gehört vorzugsweise Wasser, das mit Isocyanatgruppen unter Bildung von Kohlendioxid als Treibgas reagiert. Die Wassermengen, die zweckmäßigerweise eingesetzt werden, betragen 0,1 bis 8 Gew.-Teile, vorzugsweise 1,0 bis 3,5 Gew.-Teile und insbesondere 2,0 bis 3,0 Gew.-Teile, bezogen auf 100 Gew.-Teile der höhermolekularen Verbindungen mit mindestens zwei reaktiven Wasserstoffatomen (b).
   Im Gemisch mit Wasser können auch physikalisch wirkende Treibmittel eingesetzt werden, wobei zur Herstellung der Polyurethanweichschaumstoffe vorzugsweise ausschließlich physikalisch wirkende Treibmittel Anwendung finden. Geeignet sind Flüssigkeiten, welche gegenüber den organischen, gegebenenfalls modifizierten Polyisocyanaten(a) inert sind und Siedepunkte unter 100°C, vorzugsweise unter 50°C, insbesondere zwischen -50°C und 30°C, bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie n-, iso-Pentan und Cyclopentan, technische Pentangemische, n- und isoButan und Propan, Ether, wie Furan, Dimethylether und Diethylether, Ketone, wie Aceton und Methylethylketon, Ester, wie Ethylacetat und Methylformiat, oder halogenierte Kohlenwasserstoffe, wie Methylenchlorid, Difluormethan, Trichlorfluormethan, Dichlordifluormethan, Dichlormonofluormethan, 1,1,1-Dichlorfluorethan, 1,1,1-Chlordifluorethan, Dichlortetrafluorethan, Tetrafluorethan, 1,1,2-Trichlor-1,2,2-trifluorethan und Heptafluorpropan, sowie Edelgase, wie z.B. Krypton. Auch Gemische dieser niedrigsiedenden Flüssigkeiten untereinander und/oder mit anderen substituierten oder unsubstituierten Kohlenwasserstoffen können verwendet werden.
   Die erforderliche Menge an physikalisch wirkenden Treibmitteln kann in Abhängigkeit von der gewünschten Schaumstoffdichte auf einfache Weise ermittelt werden und beträgt 0 bis ungefähr 30 Gew.-Teile, vorzugsweise 0 bis 20 Gew.-Teile, pro 100 Gew.-Teile der höhermolekularen Verbindungen (b), wobei sich ihr Anteil bei der Mitverwendung von Wasser anteilmäßig verringert.
e) Zur Beschleunigung der Umsetzung zwischen den höhermolekularen Verbindungen mit mindestens zwei reaktiven Wasserstoffatomen (b), hydroxylgruppenhaltigen Kettenverlängerungs-oder Vernetzungsmitteln (c) und Wasser als Treibmittel (d) und den organischen und/oder modifizierten organischen Polyisocyanaten (a) werden der Reaktionsmischung übliche Polyurethankatalysatoren einverleibt. Zweckmäßigerweise verwendet werden basische Polyurethankatalysatoren, beispielsweise tertiäre Amine, wie Dimethylbenzylamin, Dicyclohexylmethylamin, Dimethylcyclohexylamin, N,N,'N'-Tetramethyl-diamino-diethylether, Bis-(dimethylaminopropyl)-harnstoff, N-Methyl- bzw. N-Ethylmorpholin, Dimethylpiperazin, N-Dimethylaminoethylpiperidin, 1,2-Dimethylimidazol, 1-Azabicyclo-(2,2,0)-octan, Dimethylaminoethanol, 2-(N,N-Dimethylaminoethoxy)ethanol, N,N',N"-Tris-(dialkylaminoalkyl)-hexahydrotriazin, z.B. N,N',N''-Tris-(dimethylaminopropyl)-s-hexahydrotriazin, Di-(4-dimethylaminocyclohexyl)-methan und insbesondere Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat, sowie insbesondere Mischungen aus tertiären Aminen und organischen Zinnsalzen. Bewährt hat sich insbesondere eine Katalysatorkombination, die als wesentliche Komponenten enthält: Triethylendiamin, Bis-(dimethylaminoethyl)ether, 2-(Dimethylaminoethoxy)ethanol, Dibutylzinndilaurat und vorzugsweise in folgenden Gewichtsmengenverhältnissen vorliegen: 0,2 bis 1,5 zu 0,1 bis 0,2 zu 0,1 bis 0,25 zu 0,1 bis 0,3 zu 0,05 bis 0,15.
   Eingesetzt werden zweckmäßigerweise 0,1 bis 10 Gew.-%, vorzugsweise 0,3 bis 3 Gew.-% Katalysator auf Basis tert. Amine und/oder 0,01 bis 0,5 Gew.-%, vorzugsweise 0,03 bis 0,25 Gew.-%, Metallsalze oder 0,1 bis 5 Gew.-%, vorzugsweise 0,3 bis 3,5 Gew.-% der vorgenannten Katalysatorkombination, bezogen auf das Gewicht der höhermolekularen Verbindungen.
f) Zur Erhöhung der Flammwidrigkeit unter gleichzeitiger Reduzierung der Rauchgasdichte im Brandfalle werden als Flammschutzmittel (f) beispielsweise Melamin oder Blähgraphit in wirksamen Mengen verwendet. Das Melamin und der Blähgraphit können hierzu in handelsüblicher Form eingesetzt werden.
   Weiterhin kommen als Flammschutzmittel, die in Mengen von 0 bis 15 Gew.-Teilen, vorzugsweise 0,5 bis 8 Gew.-Teilen, bezogen auf 100 Gew.-Teile der höhermolekularen Verbindungen mit mindestens zwei reaktiven Wasserstoffatomen (b) verwendet werden können, beispielsweise in Betracht: Stärke, zweckmäßigerweise ausgewählt aus der Gruppe der Mais, Reis-, Kartoffel- oder Weizenstärke oder Mischungen davon sowie gegebenenfalls chemisch modifizierte Stärkederivate, Phosphorverbindungen, wie z.B. Trikresylphosphat, Tris-(2-chlorethyl)-phosphat, Tris-(2-chlorpropyl)-phosphat, Tris-(1,3-dichlorpropyl)-phosphat, Tris-(2,3-dibrompropyl)-phosphat und Tetrakis-(2-chlorethyl)-ethylen-diphosphat und anorganische Salze, wie z.B. Antimontrioxid, Aluminiumoxidhydrat, Ammoniumsulfat, Calciumsulfat, Ammoniumphosphate und vorzugsweise modifizierte oder unmodifizierte Ammoniumpolyphosphate.
   Zur Vereinfachung der Handhabung und leichteren Verarbeitbarkeit können aus den Flammschutzmitteln und höhermolekularen Verbindungen mit mindestens zwei reaktiven Wasserstoffatomen Dispersionen hergestellt werden. Derartige bevorzugt zur Anwendung kommende Melamin-Blähgraphit-Polyether-polyoldispersionen bestehen aus 5 bis 100 Gew.-Teilen, vorzugsweise 35 bis 80 Gew.-Teilen und insbesondere 45 bis 65 Gew.-Teilen Melamin, 0,1 bis 35 Gew.-Teilen, vorzugsweise 1 bis 25 Gew.-Teilen und insbesondere 6 bis 18 Gew.-Teilen Blähgraphit und 100 Gew.-Teilen mindestens eines Polyether-polyols, eines polymermodifizierten Polyether-polyols oder Mischungen davon mit einer Funktionalität von 2 bis 3 und einem Molekulargewicht von 3600 bis 6500. Vorteilhaft ist hierbei, daß den Dispersionen die Treibmittel (d), Katalysatoren (e) sowie gegebenenfalls Hilfsmittel und/oder Zusatzstoffe(g) problemlos einverleibt werden können oder die Melamin-Blähgraphit-Polyether-polyoldispersionen separat der Mischvorrichtung, vorzugsweise dem Mischkopf, zugeführt und hierbei gleichzeitig dosiert werden können.
g) Der Reaktionsmischung können gegebenenfalls auch noch weitere Hilfsmittel und/oder Zusatzstoffe (g) einverleibt werden. Genannt seien beispielsweise oberflächenaktive Stoffe, Stabilisatoren, Hydrolyseschutzmittel, Porenregler, fungistatisch und bakteriostatisch wirkende Substanzen, Farbstoffe, Pigmente und Füllstoffe.
   In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,05 bis 8, vorzugsweise 0,4 bis 5, Gew.-Teilen pro 100 Gew.-Teilen der höhermolekularen Verbindungen (b) angewandt werden.
   Nähere Angaben über die oben genannten anderen üblichen Hilfs- und Zusatzstoffe sind der Fachliteratur, beispielsweise der Monographie von J.H.Saunders und K.C.Frisch "High Polymers", Band XVI, Polyurethanes, Teil 1 und 2, Verlag Interscience Publishers, 1962 bzw. 1964 oder dem Kunststoff-Handbuch, Polyurethane, Band VII, Hanser-Verlag, München, Wien, 1. bis 3. Auflage, 1966, 1983 und 1993 zu entnehmen.

Zur Herstellung der erfindungsgemäßen PUR-Weichschaumstoffe werden die organischen, gegebenenfalls modifizierten Polyisocyanate (a), die Verbindungen mit mindestens zwei reaktiven Wasserstoffatomen (b) und gegebenenfalls die Kettenverlängerungs- und/oder Vernetzungsmittel (c) in Gegenwart von Flammschutzmitteln (f), Treibmitteln (d), Katalysatoren (e) und gegebenenfalls weiteren Hilfsmitteln und/oder Zusatzstoffen (g) bei Temperaturen von 0 bis 100°C, vorzugsweise 15 bis 80°C, in solchen Mengenverhältnissen zur Reaktion gebracht, daß pro NCO-Gruppe 0,5 bis 2, vorzugsweise 0,8 bis 1,3 und insbesondere ungefähr 1, reaktive(s) Wasserstoffatom(e) gebunden an die Ausgangskomponenten (b) und (c) vorliegen und, sofern Wasser als Treibmittel eingesetzt wird, das Molverhältnis von Äquivalente Wasser zu Äquivalente NCO-Gruppe 0,5 bis 5:1, vorzugsweise 0,7 bis 0,95:1, beträgt.

Die PUR-Weichschaumstoffe werden zweckmäßigerweise nach dem one shot-Verfahren durch Vermischen von zwei Komponenten A und B hergestellt, wobei die Ausgangskomponenten (b), (d) bis (f) und gegebenenfalls (c) und (g) zu der sogenannten A-Komponente vereinigt und als B-Komponente die Ausgangskomponente (a), gegebenenfalls im Gemisch mit (f), (g) und inerten, physikalisch wirkenden Treibmitteln verwendet werden. Somit müssen die A- und B-Komponente vor Herstellung der Polyurethanweichschaumstoffe nur noch intensiv gemischt werden. Die Reaktionsmischungen können in offenen oder geschlossenen Formwerkzeugen sowie zu Blockschaumstoff verschäumt werden.

Nach dem erfindungsgemäßen Verfahren können sowohl Block- als auch Formweichschäume für alle üblichen Anwendungen hergestellt werden. Insbesondere finden sie Anwendung im Bereich Möbel für Matrazen, Liegen und Sitzpolster, im Automobilsektor für Polsterungen im Fahrgastinnenraum und bei der Herstellung von Weichschaum-Textil-Verbunden.

Die Erfindung wird in den nachfolgenden Ausführungsbeispielen näher erläutert:

### Vergleichsbeispiel 1

In einem 21-Autoklaven mit Rührwerk, Dosiereinrichtungen, Heizund Kühlmöglichkeiten sowie Druckmeßeinrichtung wurden 1320 g Glycerin vorgelegt, 506 g 45%ige Kalilauge zugegeben und unter Rühren auf 125°C erhitzt.

Anschließend wurde das Reaktionsgemisch bei einem Vakuum von ca. 25 mbar destilliert. Nach ca. 4 Stunden wurde ein Restwassergehalt von 0,24 Gew.-% erreicht.

Das Vakuum wurde mit Stickstoff gebrochen und es wurden 132 g Monoethylenglykol zugegeben und das Gemisch gut homogenisiert.

In 210 g dieses Gemisches wurden 1790 g PO zudosiert und nach einer Nachreaktion von 3 Stunden bei 110°C ein Vorpolymeres mit einer Hydroxylzahl von 167 mg KOH/g erhalten.

570 g dieses Vorpolymers wurden mit 1420 g Alkylenoxid umgesetzt, wobei eine Paralleldosierung von EO und PO derart erfolgte, daß der Anteil an EO vom Gesamtprodukt 12 % betrug. Es erfolgte eine Nachreaktion von 3 Stunden bei 100°C.

Anschließend wurde das Rohpolyetherol mit Wasser hydrolisiert und mit Phosphorsäure neutralisiert. Danach erfolgte eine Vakuumdestillation bei einer Temperatur von 120°C und einem Druck von 20 mbar.

Das getrocknete Polyetherol wurde filtriert und wies folgende Kennwerte auf:

| | |
|---|---|
| Hydroxylzahl | 48,2 mg KOH/g |
| Viskosität bei 25°C | 545 mPas |
| Wasser | 0,07 Gew.-% |
| Säurezahl | 0,03 mg KOH/g |
| Kaliumgehalt | 8 ppm |

Das Polyetherol besaß einen charakteristischen, unangenehmen Geruch.

### Vergleichsbeispiel 2

Die Polyol-Komponente, bestehend aus

| 100 Gew.-Teilen Polyetherol gemäß Vergleichsbeispiel 1 | |
|---|---|
| 3 Gew.-Teilen | Wasser |
| 0,25 Gew.-Teilen | DABCO Lupragen N201 |
| 0,2 Gew.-Teilen | Zinn(II)octoat |
| 1 Gew.-Teil | Stabilisator Tegostab BF 2370 (Fa.Goldschmidt) |

wurde mit
40 Gew.-Teilen TDI 80
intensiv vermischt und zur Umsetzung gebracht. Während der Verarbeitung und aus dem entstandenen Weichschaum, auch bei längerer Lagerung, wurde ein unangenehmer, stark belastender Geruch ausgesondert.

Der entstandene PUR-Weichschaum hatte schlechte physiko-mechanische Kennwerte. Der Druckverformungsrest (22h bei 70°C) betrug 12 % (gemessen nach DIN 53572), die Rückprallelastizität 48 % (gemessen nach DIN 53573).

### Ausführungsbeispiel 1

In einem 21-Autoklaven gemäß Vergleichsbeispiel 1 wurde das analog Vergleichsbeispiel 1 erhaltene Vorpolymer mit einer Hydroxylzahl von 167 mg KOH/g wie beschrieben zum Rohpolyetherol umgesetzt. Das alkalische Produkt wurde mit Wasser hydrolisiert und mit Phosphorsäure neutralisiert. Anschließend erfolgte eine übliche Vakuumdestillation im Reaktor bei einer Temperatur von 115°C und einem Druck von 30 mbar bis zu einem Wassergehalt von 0,1 Gew.-% und anschließend eine Grobfiltration der entstandenen Salze. Nach Erreichen des Wassergehaltes wurde das Polyetherol über eine mit Füllkörperpackungen gefüllte Kolonne bei einer Temperatur von 130°C und einem Vakuum von 18 mbar mit Stickstoff im Gegenstrom thermisch destillativ behandelt. Das behandelte Polyetherol wurde filtriert und wies folgende Kennwerte auf:

| | |
|---|---|
| Hydroxylzahl | 47,3 mg KOH/g |
| Viskosität bei 25°C | 541 mPas |
| Wasser | 0,04 Gew.-% |
| Säurezahl | 0,03 mg KOH/g |
| Kaliumgehalt | 4 ppm |

Das Polyetherol war frei von unangenehmen Gerüchen. Bei der Weiterverarbeitung zu PUR-Weichschaum gemäß Beispiel 7 trat keine Geruchsbelästigung auf. Die hergestellten Weichschaumkörper besaßen ebenfalls keinen unangenehmen Geruch.

### Ausführungsbeispiel 2

In einem 21-Autoklaven gemäß Vergleichsbeispiel 1 wurde das analog Vergleichsbeispiel 1 erhaltene Vorpolymer mit einer Hydroxylzahl von 167 mg KOH/g wie beschrieben zum Rohpolyetherol umgesetzt. Das alkalische Produkt wurde im Stickstoffgegenstrom bei 130°C und 20 mbar über eine 25 cm Füllkörperkolonne destilliert, wobei das Produkt am Kopf der Kolonne zugeführt wurde und der heiße Stickstoff über die Füllköper entgegenströmte. Nach ca. 5 Stunden war die Destillation beendet, das Rohpolyetherol wurde mit Wasser hydrolysiert und mit Phosphorsäure neutralisiert. Anschließend erfolgte eine Vakummdestillation bei einer Temperatur von 120°C und ca. 40 mbar. Das getrocknete Polyetherol wurde filtriert und wies folgende Kennwerte auf:

| | |
|---|---|
| Hydroxylzahl | 47,9 mg KOH/g |
| Viskosität bei 25°C | 557 mPas |
| Wasser | 0,04 Gew.-% |
| Säurezahl | 0,03 mg KOH/g |
| Kaliumgehalt | 7 ppm |

Das Polyetherol war frei von unangenehmen Gerüchen. Bei der Verarbeitung zu PUR-Weichschaum gemäß Beispiel 7 trat keine,Geruchsbelästigung auf. Der Weichschaumkörper besaß ebenfalls keinen unangenehmen Geruch.

### Ausführungsbeispiel 3

In einem 21-Autoklaven gemäß Vergleichsbeispiel 1 wurde das analog Vergleichsbeispiel 1 erhaltene Vorpolymer mit einer Hydroxylzahl von 167 mg KOH/g wie beschrieben zum Rohpolyetherol umgesetzt. Das alkalische Produkt wurde mit Wasser hydrolysiert und mit Phosphorsäure neutralisiert. Anschließend wurde bis zu einem Wasserwert von 0,1 Gew.-% bei einer Temperatur von 115°C und 40 mbar destilliert und filtriert. Nach dem Abfiltrieren des Salzes wurde das Polyetherol im Stickstoffgegenstrom bei 120°C und 20 mbar über eine 25 cm Füllkörperkolonne destilliert, wobei das Produkt am Kopf der Kolonne zugeführt wurde und der heiße Stickstoff über die Füllkörper entgegenströmte. Nach ca. 5 Stunden war die Destillation beendet. Das erhaltene Polyetherol hatte folgende Kennwerte:

| | |
|---|---|
| Hydroxylzahl | 47,7 mg KOH/g |
| Viskosität bei 25°C | 553 mPas |
| Wasser | 0,01 Gew.-% |
| Säurezahl | 0,02 mg KOH/g |
| Kaliumgehalt | 8 ppm |

Das Polyetherol war frei von unangenehmen Gerüchen. Bei der Verarbeitung zu PUR-Weichschaum gemäß Beispiel 7 trat keine Geruchsbelästigung auf. Der Weichschaumkörper besaß ebenfalls keinen unangenehmen Geruch.

### Ausführungsbeispiel 4

In einem 21-Autoklaven gemäß Vergleichsbeispiel 1 wurde das analog Vergleichsbeispiel 1 erhaltene Vorpolymer mit einer Hydroxylzahl von 167 mg KOH/g wie beschrieben zum Rohpolyetherol umgesetzt. Das alkalische Produkt wurde mit Wasser hydrolysiert und mit Salzsäure neutralisiert. Überschüssige Salzsäure wurde mit PO gebunden. Das salzhaltige Produkt wurde zentrifugiert und danach filtriert.
Das noch heiße Polyetherfiltrat wurde über den Kopf auf einen Fallfilmverdampfer geleitet und bei 130°C und 25 mbar Vakuum behandelt. Nach ca. 3,5 Stunden war die destillative Behandlung beendet. Das erhaltene Polyetherol hatte folgende Kennwerte:

| | |
|---|---|
| Hydroxylzahl | 48,0 mg KOH/g |
| Viskosität bei 25°C | 541 mPas |
| Wasser | 0,02 Gew.-% |
| Säurezahl | 0,03 mg KOH/g |
| Kaliumgehalt | 6 ppm |

Das Polyetherol war frei von unangenehmen Gerüchen. Bei der Verarbeitung zu PUR-Weichschaum gemäß Beispiel 7 trat keine Geruchsbelästigung auf. Der Weichschaumkörper besaß ebenfalls keinen unangenehmen Geruch.

### Ausführungsbeispiel 5

In einen 21-Autoklaven gemäß Vergleichsbeispiel 1 wurden 1225 g Glycerin vorgelegt, 275 g 45%ige Kalilauge zugegeben und unter Rühren auf 130°C erhitzt. Anschließend wurde das Reaktionsgemisch bei einem Vakuum von 40 bis 25 mbar destilliert. Nach ca. 4 Stunden wurde ein Restwassergehalt von 0,04 Gew.-% erreicht. Das Vakuum wurde mit Stickstoff gebrochen. 170 g dieses Reaktionsgemisches wurden bei 125°C und 5 bar mit 1630 g PO zu einem Vorpolymer mit einer Hydroxylzahl von 156 mg KOH/g umgesetzt, eine Nachkatalyse mit 54 g 48%iger Kalilauge durchgeführt und bei einem Vakuum von 25 mbar bis zu einem Wassergehalt von 0,04 Gew.-% destilliert. 250 g dieses hochkatalysierten Vorpolymers wurden bei 120°C mit 1200 g PO umgesetzt und es erfolgte eine Nachreaktion von 2 Stunden bei 112°C. Das alkalische Produkt wurde im Stickstoffgegenstrom bei 120°C und 30 mbar über eine 25 cm Füllkörperkolonne destilliert, wobei das Produkt am Kopf der Kolonne zugeführt wurde und der heiße Stickstoff über die Füllkörper entgegenströmte. Nach ca. 5 Stunden war die Destillation beendet. 1460 g des Destillats wurden bei 112°C mit 330 g EO umgesetzt, das Produkt einer Nachreaktion von einer halben Stunde bei 110°C unVerworfen, mit Wasser hydrolysiert und mit Salzsäure neutralisiert. Die überschüssige Salzsäure wurde mit PO umgesetzt und die Chlorhydrine mit Stickstoff ausgetrieben. Im Anschluß daran wurde das Produkt filtriert. Das erhaltene Polyetherol hatte folgende Kennwerte:

| | |
|---|---|
| Hydroxylzahl | 34,7 mg KOH/g |
| Viskosität bei 25°C | 834 mPas |
| Säurezahl | 0,02 mg KOH/g |
| Kaliumgehalt | 5 ppm |

Das Polyetherol war frei von unangenehmen Gerüchen. Bei der Verarbeitung zu PUR-Weichschaum gemäß Beispiel 7 trat keine Geruchsbelästigung auf. Der Weichschaumkörper besaß ebenfalls keinen unangenehmen Geruch.

### Ausführungsbeispiel 6

In einem 21-Autoklaven gemäß Vergleichsbeispiel 1 wurde das analog Vergleichsbeispiel 1 erhaltene Vorpolymer mit einer Hydroxylzahl von 167 mg KOH/g wie beschrieben zum Rohpolyetherol umgesetzt. Das alkalische Produkt wurde mit Wasser hydrolisiert und mit Phosphorsäure neutralisiert. Anschließend erfolgte eine Vakuumdestillation bei Temperaturen von 130°C und 40 mbar. Das getrocknete Polyetherol wurde filtriert. Das so erhaltene Polyetherol wurde über einen Dünnschichtverdampfer mit routierendem Abstreifer bei Temperaturen von 120°C und Vakuum von 5 mbar gegeben. Das erhaltene Polyetherol hatte folgende Kennwerte:

| | |
|---|---|
| Hydroxylzahl | 47,4 mg KOH/g |
| Viskosität bei 25°C | 546 mPas |
| Wasser | 0,02 Gew.-% |
| Säurezahl | 0,03 mg KOH/g |
| Kaliumgehalt | 5 ppm |

Das Polyetherol war frei von unangenehmen Gerüchen. Bei der Verarbeitung zu PUR-Weichschaum gemäß Beispiel 7 trat keine Geruchsbelästigung auf. Der Weichschaumkörper besaß ebenfalls keinen unangenehmen Geruch.

### Ausführungsbeispiel 7

Die Polyolkomponente, bestehend aus

| | |
|---|---|
| 100 Gew.-Teilen eines Polyetherols gemäß Ausführungsbeispiel 1 oder 2 oder 3 oder 4 oder 5 oder 6 | |
| 3 Gew.-Teilen | Wasser |
| 0,25 Gew.-Teilen | DABCO Lupragen N201 |
| 0,2 Gew.-Teilen | Zinn(II)octoat |
| 1 Gew.-Teil | Stabilisator Tegostab BF 2370 (Fa.Goldschmidt) |

wurde mit
40 Gew.-Teilen TDI 80 intensiv vermischt und zur Umsetzung gebracht.

Während der Verarbeitung und aus dem entstandenen Weichschaum, auch bei längerer Schaumlagerung, wurde keinerlei unangenehmer Geruch ausgesondert.

Der PUR-Weichschaum hatte sehr gute physikomechanische Kennwerte. Die Messungen des Druckverformungsrestes (22h bei 70°C) sowie der Rückprallelastizität, gemessen nach den in Vergleichsbeispiel 2 angegebene DIN-Normen, ergaben folgende Werte:

| eingesetztes Polyetherol gemäß Ausführungsbeispiel | Druckverformungsrest in % | Rückprallelastizität in % |
|---|---|---|
| 1 | 7 | 65 |
| 2 | 6 | 75 |
| 3 | 5 | 68 |
| 4 | 4 | 78 |
| 5 | 4 | 73 |
| 6 | 5 | 67 |

## Patentansprüche

1. Verfahren zur Herstellung von Polyurethanweichschaumstoffen durch Umsetzung von
a) organischen und/oder modifizierten organischen Polyisocyanaten mit
b) Verbindungen mit mindestens zwei reaktiven Wasserstoffatomen und
c) gegebenenfalls Kettenverlängerungs und/oder Vernetzungsmitteln
in Gegenwart von
d) Treibmitteln,
e) Katalysatoren
f) Flammschutzmitteln sowie gegebenenfalls
g) weiteren Hilfsmitteln und / oder Zusatzstoffen,
**dadurch gekennzeichnet, daß** die Verbindungen mit mindestens zwei reaktiven Wasserstoffatomen (b) zu mindestens 10 Gew.-% aus Polyetherpolyolen, herstellbar durch basisch-katalysierte Umsetzung von Ethylenoxid, Propylenoxid und/oder Butylenoxid mit OH-funktionellen Startsubstanzen, bestehen, die während oder nach der Alkylenoxidanlagerung bei einem Wassergehalt von höchstens 0,1 Gew.-% einer destillativen Behandlung bei Temperaturen oberhalb 49°C unterzogen werden.

2. Verfahren nach Anspruch 1, **dadurch gekennzeichnet, daß** die kombinierte thermisch-destillative Behandlung im wasserfreien Zustand durchgeführt wird.

3. Verfahren nach Anspruch 1 oder 2, **dadurch gekennzeichnet, daß** die kombinierte thermisch-destillative Behandlung beim Wechsel vom höheren zum niederen Alkylenoxid bei einem Gehalt an freiem höherem Alkylenoxid von höchstens 1 Gew.-%, bezogen auf das Gewicht des Reaktionsgemisches, durchgeführt wird.

4. Verfahren nach einem der Ansprüche 1 bis 2, **dadurch gekennzeichnet, daß** die kombinierte thermisch-destillative Behandlung nach der Alkylenoxidanlagerung bei pH-Werten kleiner als 7 durchgeführt wird.

5. Verfahren nach einem der Ansprüche 1 bis 4, **dadurch gekennzeichnet, daß** die kombinierte thermisch-destillative Behandlung bei Temperaturen von 80 bis 130°C, durchgeführt wird.

6. Verfahren nach einem der Ansprüche 1 bis 5, **dadurch gekennzeichnet, daß** die kombinierte thermisch-destillative Behandlung über eine Oberflächen vergrößernde Einrichtung durchgeführt wird.

7. Verwendung der nach einem der Ansprüche 1 bis 6 hergestellten Polyurethanweichschaumstoffe im Automobil- und Möbelbereich sowie zur Herstellung von Weichschaum-Textil-Verbunden.

## Claims

1. A process for producing flexible polyurethane foams by reacting
a) organic and/or modified organic polyisocyanates with
b) compounds containing at least two reactive hydrogen atoms and
c) if desired, chain extenders and/or crosslinkers
in the presence of
d) blowing agents,
e) catalysts,
f) flame retardants and, if desired,
g) further auxiliaries and/or additives,
wherein the compounds containing at least two reactive hydrogen atoms (b) comprise at least 10% by weight of polyether polyols which can be prepared by base-catalyzed reaction of ethylene oxide, propylene oxide and/or butylene oxide with OH-functional initiator substances and are subjected, during or after the molecular addition of alkylene oxide, to a distillative treatment at a water content of at most 0.1 % by weight and at above 49°C.

2. A process as claimed in claim 1, wherein the combined thermal/distillative treatment is carried out in the water-free state.

3. A process as claimed in claim 1 or 2, wherein the combined thermal/distillative treatment is carried out on changing from a higher to a lower alkylene oxide at a content of free higher alkylene oxide of at most 1 % by weight, based on the weight of the reaction mixture.

4. A process as claimed in any of claims 1 to 2, wherein the combined thermal/distillative treatment is carried out after the molecular addition of alkylene oxide at a pH of less than 7.

5. A process as claimed in any of claims 1 to 4, wherein the combined thermal/distillative treatment is carried out at from 80 to 130°C.

6. A process as claimed in any of claims 1 to 5, wherein the combined thermal/distillative treatment is carried out by means of an apparatus which increases the surface area.

7. Use of the flexible polyurethane foams produced as claimed in any of claims 1 to 6 in the automobile or furniture sector and for producing flexible foam/textile composites.

## Revendications

1. Procédé de préparation de mousses flexibles de polyuréthane, par réaction de
a) polyisocyanates organiques et/ou organiques modifiés, avec
b) des composés comprenant au moins deux atomes d'hydrogène réactifs, et
c) éventuellement, des prolongateurs de chaîne et/ou des agents réticulants
en présence de
d) propulseurs
e) catalyseurs
f) ignifugeants, et éventuellement,
g) d'autres adjuvants et/ou additifs,
**caractérisé en ce que** les composés comprenant au moins deux atomes d'hydrogène réactifs (b) sont constitués à raison d'au moins 10 % en poids de polyétherpolyols pouvant être obtenus par réaction, catalysée par des bases, d'oxyde d'éthylène, d'oxyde de propylène et/ou d'oxyde de butylène avec des substances de départ portant une fonction OH, qui sont soumis, pendant ou après l'addition de l'oxyde d'alkylène, avec une teneur en eau de maximum 0,1 % en poids, à un traitement de distillation à des températures supérieures à 49°C.

2. Procédé selon la revendication 1, **caractérisé en ce que** le traitement combiné thermique - de distillation est effectué à l'état anhydre.

3. Procédé selon la revendication 1 ou 2, **caractérisé en ce que** le traitement combiné thermique - de distillation est effectué, en passant des oxydes d'alkylène supérieurs aux oxydes d'alkylène inférieurs, avec une teneur en oxydes d'alkylène supérieurs libres de maximum 1 % en poids, par rapport au poids du mélange réactionnel.

4. Procédé selon l'une des revendications 1 à 2, **caractérisé en ce que** le traitement combiné thermique - de distillation est effectué après l'addition d'oxyde d'alkylène à un pH inférieur à 7.

5. Procédé selon l'une quelconque des revendications 1 à 4, **caractérisé en ce que** le traitement combiné thermique - de distillation est effectué à une température de 80 à 130°C.

6. Procédé selon l'une quelconque des revendications 1 à 5, **caractérisé en ce que** le traitement combiné thermique - de distillation est effectué à l'aide d'un dispositif qui augmente la surface.

7. Utilisation de mousses flexibles de polyuréthane obtenues selon l'une quelconque des revendications 1 à 6, dans l'industrie automobile et l'industrie du meuble, ainsi que pour la préparation de matériaux composites à base de mousse flexible-textile.
